# EUROPÄISCHE PATENTSCHRIFT

(11) **EP 3 594 585 B1**
(45) Veröffentlichungstag und Bekanntmachung des Hinweises auf die Patenterteilung: **21.09.2022**
(21) Anmeldenummer: 19182369.9
(22) Anmeldetag: 25.06.2019
(51) Int. Cl.: F24F 13/24, F16L 55/033, F24F 13/02, F16L 55/052

(54) **VORRICHTUNG ZUR LÄRMDÄMMUNG, UM DAS ENDE EINER LUFTLEITUNG AUSZUSTATTEN, DIE VON EINEM GASSTROM (LUFTSTROM) DURCHQUERT WIRD**
NOISE ATTENUATING DEVICE FOR THE END OF AN AIR CONDUIT WITH A GAS STREAM (AIR STREAM) RUNNING THROUGH IT
DISPOSITIF D'ISOLATION ACOUSTIQUE DESTINÉ À ÉQUIPER L'EXTRÉMITÉ D'UNE CONDUITE D'AIR TRAVERSÉE PAR UN FLUX DE GAZ (FLUX D'AIR)

(30) Priorität: 02.07.2018 FR 1856087
(43) Veröffentlichungstag der Anmeldung: 15.01.2020
(73) Patentinhaber: Robert Bosch GmbH, 70442 Stuttgart (DE)
(72) Erfinder: Au, Carine, 75013 Paris (FR); Merzkirch, Alexander, 70565 Stuttgart (DE)

(56) Entgegenhaltungen:
- WO-A1-2011/034469
- CN-U- 205 425 339
- FR-A1- 2 376 994
- JP-A- H0 266 396
- JP-A- S5 686 295
- JP-A- 2007 078 322

## Beschreibung

### Gebiet der Erfindung

Die vorliegende Erfindung betrifft eine Vorrichtung zur Lärmdämmung, um das Ende einer Luftleitung auszustatten, die von einem Gasstrom (Luftstrom) durchquert wird.

### Stand der Technik

Es ist bekannt, dass Gasströme, die in Leitungen zirkulieren, beispielsweise in Lüftungssystemen und ebenso den Systemkomponenten, insbesondere einem Ventilator, Lärm erzeugen, und dass es wünschenswert ist, diesen zu reduzieren.

Somit ist gemäß dem Dokument DE 10 2015 111 828 A1 ein Lüftungssystem bekannt, das in einer Wand integriert ist. Dieses Lüftungssystem besteht aus einem Ventilator, der mit einem Wärmetauscher kombiniert ist, um die Wärme zwischen dem Luftstrom, der in einer Richtung von einer Seite der Trennwand ankommt, und dem Luftstrom, der in der entgegengesetzten Richtung von der anderen Seite der Trennwand kommt, auszutauschen. Der Wärmetauscher arbeitet, indem die Ströme auf synchronisierte Weise abgewechselt werden.

Dieses System ist jedoch hauptsächlich dazu bestimmt, Wärme aus dem Luftstrom zurückzugewinnen, der aus einem Ort austritt, und den entnommenen Luftstrom an der Außenseite wieder zu erwärmen, um in den Ort eingebracht zu werden.

Diese Vorrichtung besteht aus einer rohrförmigen Einheit, welche die Trennwand durchquert, und deren zwei Austritte an den Enden von einem Ablenker bedeckt sind. Dieses System zum Austauschen von Luft oder zum Erneuern von Luft mit einer Wärmerückgewinnung behandelt jedoch das Problem des Lärms nicht effizient, der durch die Ablenkung der Luftströme erzeugt wird, da die Ablenker an jedem Eintritts- und Austrittsende der Luft die einzige Funktion haben, den Luftstrom abzulenken und zu verteilen.

Die JP S56 86295 A offenbart eine Vorrichtung zur Lärmdämmung nach dem Oberbegriff des Patentanspruchs 1.

### Aufgabe der Erfindung

Die vorliegende Erfindung hat die Aufgabe, die Lärmemissionen am Eintritt/Austritt von Lüftungssystemen zu reduzieren, indem insbesondere bestimmte Frequenzbereiche behandelt werden.

### Kurzdarstellung und Vorteile der Erfindung

Zu diesem Zweck hat die Erfindung als Aufgabe eine Vorrichtung zur Lärmdämmung nach Anspruch 1.

Die Vorrichtung zur Lärmdämmung gemäß der Erfindung ermöglicht es, die Geräusche mit hohen Frequenzen effizient zu reduzieren, jedoch auch jene in einem Frequenzbereich global zwischen ungefähr 300 Hz und 900 Hz. Dies deckt den Bereich der Mehrheit der Lärmfrequenzen ab, die durch die Zirkulation eines gasförmigen Fluids und die Komponenten des Lüftungssystems erzeugt werden, das heißt, der Luft am Austritt einer Leitung.

Die Kombination einer Schicht aus einem Schaum, der die hohen Frequenzen absorbiert, und von Helmholtz-Resonatorhohlräumen, die die tiefen Frequenzen absorbieren, stellt eine vorteilhafte Kombination zur Behandlung von Lärm dar, der am Austritt von Lüftungssystemen erzeugt wird.

Diese Erfindung ermöglicht auf einfache und effiziente Weise die Kombination von Resonanzhohlräumen, die auf verschiedene Frequenzen abgestimmt, sogar verteilt sind, um einen großen Bereich tiefer Frequenzen abzudecken. Dies gestattet das Abdecken zahlreicher stationärer Wellenmoden für verschieden Längen von Leitungen durch die geeignete Form der Resonanzhohlräume, welche die Absorption von Lärm effizient verbessern.

Gemäß einer vorteilhaften Charakteristik ist die Abdeckung aus einem Boden gebildet, der von einer Seitenwand begrenzt wird, die mit einem Rand versehen ist, um sich mit dem Rand der Aussparung des Körpers zusammenzufügen und diese zu verschließen.

Diese Ausführungsform stellt eine Lösung dar, die einfach herzustellen ist.

Gemäß einer weiteren vorteilhaften Charakteristik ist in dieser Ausführungsform der Boden der Abdeckung gekrümmt, insbesondere in den drei Richtungen des Raums.

Gemäß einer weiteren Charakteristik ist die Bahn einteilig mit den Trennwänden und den rohrförmigen Elementen hergestellt, welche die Hälse der Hohlräume bilden.

Gemäß einer weiteren vorteilhaften Ausführungscharakteristik ist der Rahmen in der Form einer Platte mit den Trennwänden, welche die Resonatorhohlräume begrenzen, wobei diese Platte mit der Bahn kombiniert ist, die mit rohrförmigen Elementen versehen ist, welche die Hälse der Resonatorhohlräume bilden, wobei die Platte mit Trennwänden und die Bahn getrennt hergestellt werden und dann zusammengefügt werden.

In dieser Ausführungsform ist der Rahmen eine flache Einheit, die durch ihre Fixierung in der Abdeckung mit gebogener Form in eine gebogene Form gebracht wird, wobei der Rahmen gegen den Boden der Abdeckung anliegt, um so die Resonatorhohlräume zu begrenzen.

Gemäß einer vorteilhaften Ausführungsform hat die Wand der Abdeckung eine Höhe mindestens gleich der Höhe des Rahmens und insbesondere gleich der Höhe des Rahmens, der von der Schicht aus absorbierendem Schaum bedeckt ist.

Dies erleichtert die getrennte Herstellung der Abdeckung und des Körpers sowie ihr Zusammenfügen.

Vorteilhafterweise sind die Trennwände, die die Wände trennen, mit Öffnungen versehen, die eine Kopplung der Resonatorhohlräume gestatten. Gemäß einer anderen Variante sind die Trennwände, welche die Hohlräume begrenzen, relativ nachgiebig, was auch eine Kopplung der Hohlräume ermöglicht.

Die verschiedenen Elemente der Vorrichtung zur Lärmdämmung, insbesondere ihr Rahmen, sind aus Kunststoffmaterial hergestellt.

### Zeichnungen

Die vorliegende Erfindung wird hier im Nachstehenden detaillierter mit Hilfe der Ausführungsformen einer Vorrichtung zur Dämmung des Lärms, der von einem Gasstrom erzeugt wird, und des Quellen internen Lärms des Systems (Ventilator) in einer Luftleitung beschrieben, die in den beigeschlossenen Zeichnungen dargestellt werden, in denen:
- Figur 1 eine schematische Schnittansicht einer Vorrichtung zur Lärmdämmung ist, welche am Ende einer Leitung installiert ist, die von einem Gasstrom durchquert wird,
- Figur 2 eine auseinandergezogene Schnittansicht der Vorrichtung zur Lärmdämmung von Figur 1 ist,
- Figur 3 eine auseinandergezogene Schnittansicht einer anderen Ausführungsform einer Vorrichtung zur Lärmdämmung nach der Erfindung für eine
   Leitung ist, die von einem Gasstrom durchquert wird,
- Figur 3a eine Ansicht teilweise im Schnitt der Vorrichtung zur Lärmdämmung von Figur 3 ist.

### Beschreibung von Ausführungsformen der Erfindung

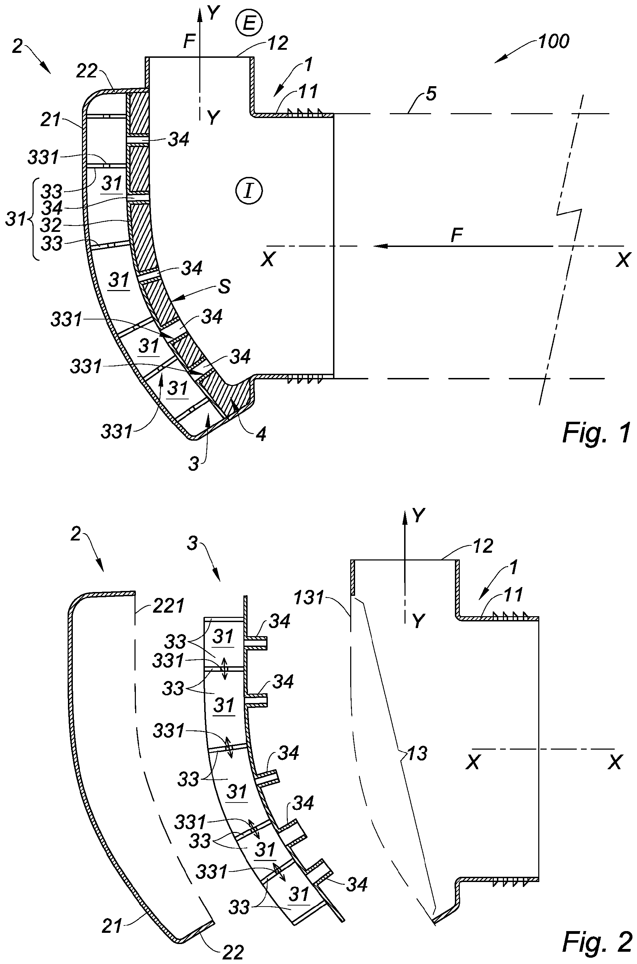

Gemäß Figur 1 hat die Erfindung als Aufgabe eine Vorrichtung zur Lärmdämmung 100, um das Ende einer Luftleitung 5 auszustatten, die in einer Richtung oder einer anderen Richtung von einem Gasstrom (Luftstrom) durchquert wird, der an die Außenseite (E) in einer Austrittsrichtung abgeführt wird, oder entgegengesetzt dazu von einem Strom, der von der Außenseite (E) ankommt, um durch die Leitung 5 hindurchzugehen. Die Vorrichtung zur Lärmdämmung 100 ist dazu bestimmt, den Lärm zu reduzieren, der von dieser Änderung der Richtung des Luftstroms erzeugt wird.

Die Vorrichtung zur Lärmdämmung 100 besteht aus einem Körper 1, der mit einer Verbindung 11, um diesen mit der Leitung 5 zu verbinden, und einer Öffnung 12 für den Austritt/Eintritt des Gasstroms versehen ist. Die Richtung des Stroms in der Leitung 5 ist jene der Achse xx, und seine Richtung zur Ankunft in der Öffnung 12 ist die Richtung yy.

An der Zusammenführung der beiden Richtungen des Gasstroms bildet der Körper 1 eine offene Biegung, welche von einer Abdeckung 2 bedeckt ist, die in Bezug auf die Richtung xx geneigt ist, um einen Ablenker zu bilden, der den Gasstrom von der Richtung xx in die Richtung yy oder umgekehrt ablenkt.

Der Ablenker umfasst eine Struktur 3, die in der Abdeckung 2 aufgenommen ist und mit der Abdeckung 2 kombiniert ist, um Helmholtz-Resonatorhohlräume 31 zu bilden; die Hohlräume sind von einer Schicht aus absorbierendem Schaum 4 bedeckt, welche die dem Gasstrom ausgesetzte Fläche S des Ablenkers begrenzt.

Die Schicht 4 befindet sich auf einer Bahn 32, welche die Unterseite der Hohlräume 31 verschließt.

Die Helmholtz-Resonatorhohlräume 31 kommunizieren mit dem Inneren (I) des Körpers 1 der Vorrichtung 100 durch rohrförmige Hälse 34, welche die Bahn des Schaums 4 durchqueren, um in die Fläche S der Bahn 4 zu münden.

Die Hohlräume 31 werden so jeweils von dem Boden 21 der Abdeckung 2, den seitlichen Trennwänden 33 und der Unterseite begrenzt, die von der Bahn 32 gebildet wird, indem sie durch die Hälse 34 einmünden, wobei sie so die Helmholtz-Resonatoren bilden.

Figur 1 ist eine nicht maßstabgetreue schematische Schnittansicht, welche die Hohlräume 31 mit unterschiedlicher Form und unterschiedlichem Volumen zeigt, um sich auf verschiedene zu behandelnde Resonanzfrequenzen in den mittleren und unteren Frequenzbereichen einzustellen.

Die Schaumschicht 4 mit offenen Zellen absorbiert die hohen Frequenzen.

Es ist anzumerken, dass der Ablenker 2, 3, 4, der das absorbierende Element darstellt, idealerweise mit Biegungen in drei Dimensionen versehen ist; er muss gleichzeitig den Gasstrom von der Richtung xx in die Richtung yy ablenken, wobei gleichzeitig der Lärm reduziert wird, der durch diese Ablenkung erzeugt wird; der Ablenker ist global eine Fläche S, die in den drei Richtungen xx, yy und zz gebogen ist; diese letztere nicht dargestellte Richtung ist rechtwinklig zur Ebene der Achsen xx und yy. Diese ideale geometrische Fläche (S) kann in der Form einer Fläche mit geringer Biegung, sogar einer ebenen Fläche, vereinfacht werden, oder auch einer Fläche, die aus ebenen Facetten besteht, oder auch einer Kombination gebogener Flächen und ebener Flächen.

Die Hohlräume 31 können mit Aussparungen 331 in den Trennwänden 33 oder durch nachgiebige Trennwände 33 gekoppelt sein, die sie trennen, um die Resonanzfrequenzen der Hohlräume abzustufen und die Übereinstimmung mit den abgestuften Frequenzen herzustellen. In dem Maß, in dem es aus Gründen der technischen Herstellung vorteilhaft ist, dass die radiale Höhe der Hohlräume 31 in der radialen Richtung, im Wesentlichen lokal rechtwinklig zur Bahn 32, die gleiche ist, sind die Trennwände 33 als Funktion des Volumens verteilt, das die verschiedenen Hohlräume gemäß den Resonanzfrequenzen aufweisen müssen, mit denen sie übereingestimmt werden müssen. Das Gleiche gilt für die Abmessung der Hälse. Aus Gründen der Einfachheit der Ausführung hat der Hals eine konstante Höhe. Sein Radius kann hingegen von einem Resonator zum anderen variieren, um einen ergänzenden Abmessungsparameter zu haben, der es am besten ermöglicht, die Resonatoren auf die gewünschte Frequenz abzustimmen.

Die Vorrichtung 100 wird vorteilhafterweise durch die Kombination der Abdeckung 2 mit der Struktur 3 hergestellt, die von der Schaumschicht 4 bedeckt ist.

Die Struktur 3 ist vorzugsweise aus geformtem/gespritzem Kunststoffmaterial, das anschließend mit der Schaumschicht 4 versehen wird, um an der Abdeckung 2 fixiert zu werden, und dann wird die Einheit mit dem Körper 1 verbunden.

Figur 2 ist eine auseinandergezogene Schnittansicht der Vorrichtung 100 von Figur 1 und zeigt den Schnitt der Struktur 3 in einer mittleren Ebene (das heißt, einer Ebene parallel zur Ebene der Achsen xx, yy). Die Abdeckung 2, die aus dem Boden 21 und seiner Wand 22 gebildet wird, ist mit dem Rand 211 dargestellt, der durch eine gestrichelte Linie gezeigt ist, welche die Verbindungslinie der beiden geometrischen Flächen bildet, die einerseits aus der Wand 22, die den Boden 21 umgibt, und andererseits durch die komplexe Form der Aussparung 13 des Körpers 1 gebildet werden. Diese Letztere hat einen Rand 131 mit einer Form, die mit jener des Rands 221 identisch ist. Diese Verbindungslinie, die im Allgemeinen geschweißt ist, zwischen dem Rand 221 und dem Rand 113 ist von der komplexen geometrischen Form gleichzeitig der Abdeckung 2 und des Körpers 1 abhängig. Die Verbindung kann auch durch mechanische Verzahnung erfolgen.

Die Struktur 3 ist ohne die Schaumschicht 4 dargestellt.

Die Höhe der Wand 22 ist mindestens gleich der Höhe der Hohlräume 31 und insbesondere der Höhe der Struktur 3, die mit der Schaumschicht 4 versehen ist, so dass die Einheit des Ablenkers, der so durch die Platzierung und die Fixierung der Struktur 3 in der Abdeckung 2 auch mit der Schaumschicht 4 gebildet wird, ein Element darstellt, das einfach am Körper 1 befestigt wird. Diese Fixierung wird zum Beispiel durch Schweißen, Kleben oder auch Einpassen gemäß der Assemblierlinie hergestellt, die durch die Ränder 131, 221 des Körpers 1 und der Abdeckung 2 gebildet wird. Es kann auch eine Überlappung der Ränder vor der endgültigen Fixierung durch Schweißen oder Kleben vorliegen. Diese Ausführungsform der Erfindung ermöglicht es, dass eine Fläche S des Ablenkers (2, 3, 4) deutlich über der Verbindungssektion 11 erhalten wird.

Die Struktur 3 wird aus einem steifen Material und mit der geeigneten gebogenen Form oder aus einem ausreichend nachgiebigen Material hergestellt, um zuerst eine flache Ausbildung und dann eine Biegung durch die Platzierung und die Fixierung in der steifen Abdeckung 2 mit gebogener Form zu gestatten.

Der Körper 1 und die Abdeckung 2 werden vorzugsweise aus einem Kunststoffmaterial hergestellt.

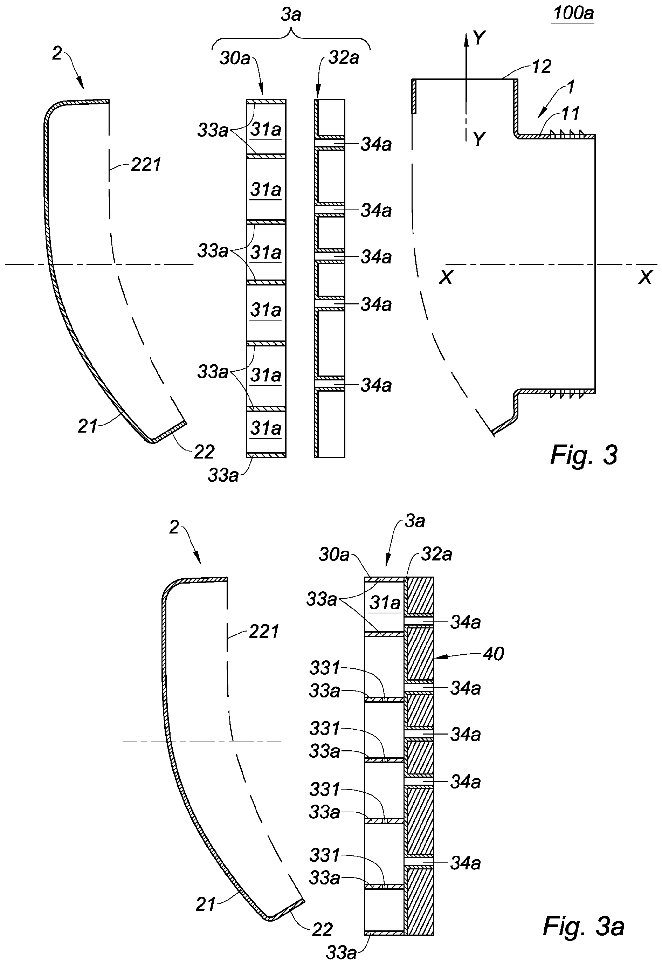

Figur 3 zeigt eine andere Ausführungsform der Vorrichtung 100a zur Lärmdämmung nach der Erfindung, die sich von der vorhergehenden Ausführungsform 100 durch ihre Struktur 3a unterscheidet.

Die Elemente, die identisch sind mit jenen der Ausführungsform von Figur 2, tragen dieselben Bezugszeichen, und die analogen Elemente tragen dieselben Bezugszahlen, ergänzt mit dem Suffix a.

In dieser zweiten Ausführungsform der Erfindung 100a sind der Körper 1 und die Abdeckung 2 identisch mit jenen der ersten Ausführungsform; es besteht nur eine Änderung der geschäumten Struktur 3a. Diese, aus zwei Teilen, besteht aus einer Platte 30a mit Trennwänden, die durch die Trennwände 33a und eine Bahn 32a unterteilt ist, welche von der Platte 30a mit Trennwänden verschieden ist. Die Hohlräume 31a, die von den Trennwänden 33a begrenzt werden, sind offen. Die Trennwände definieren die Konturen der Hohlräume 31a mit geeigneten identischen oder unterschiedlichen Abmessungen. Eine Deckschicht 4a, die aus absorbierendem Schaum gebildet ist, bedeckt die Bahn 32a, die von den rohrförmigen Elementen 34 a durchquert wird, welche die Hälse bilden.

Die Bahn 32a trägt die einmündenden rohrförmigen Elemente 34a, das heißt, welche die Bahn 32a durchqueren. Die rohrförmigen Elemente 34a haben eine Höhe gleich der Dicke der Schicht aus absorbierendem Schaum 4a, welche die Bahn 32a bedeckt, die sie durchqueren.

Das Zusammenfügen der beiden Teile 30a, 32a ist in Figur 3a dargestellt.

Die Bahn 32a wird an dem Teil der Trennwände 33a fixiert, von denen einige im Schnitt dargestellt sind und andere von vorne gezeigt sind. Diese Fixierung kann durch Schweißen oder Kleben erfolgen. Die Schaumschicht 4a wird auf der Bahn 32a vor oder nach ihrem Zusammenfügen mit der Platte 30a mit den Trennwänden angeordnet.

Die Platte 30a mit den Trennwänden und die Bahn 32a sind aus einem Kunststoffmaterial mit einer ausreichenden Nachgiebigkeit hergestellt, um durch das Zusammenfügen mit der steifen Abdeckung 2 die gebogene Form mit den Biegungen in drei Richtungen x, y, z anzunehmen. Die Flexion der Bahn wird durch die lokale Kompression der Schaumschicht 4a absorbiert.

In den verschiedenen Ausführungsformen der Erfindung, die hier im Vorstehenden beschrieben werden, ist die Orientierung der rohrförmigen Elemente 34, 34a, welche die Hälse bilden, radial in Bezug auf die Fläche, welche die rohrförmigen Elemente trägt. Im Fall der Ausführungsform von Figur 3 ist diese Orientierung anfänglich rechtwinklig.

Die Hälse 34a münden nicht notwendigerweise in der Mitte des Schnitts jedes Hohlraums 31a, so dass gemäß den Vorgaben der Herstellung oder des Zusammenfügens der Platte 30a mit den Trennwänden und der Bahn 32a, welche die rohrförmigen Elemente trägt, die die Hälse 34a bilden, und der Schaumschicht 4a eine Versetzung oder Dezentrierung vorhanden sein kann.

### NOMENKLATUR

- 100, 100a: Vorrichtung zur Lärmdämmung
- 1: Körper

- 11: Verbindung
- 12: Eintritts-/Austrittsöffnung des Stroms
- 13: Aussparung
- 131: Rand der Aussparung

- 2: Abdeckung

- 21: Boden
- 22: Wand

- 221: Rand

- 3: Struktur

- 30a: Platte
- 31, 31a: Hohlraum
- 32, 32a: Bahn
- 33, 33a: Trennwand

- 331, 331a: Aussparung

- 34, 34a: Rohrförmiges Element, das einen Hals bildet

- 4, 4a: Schaumschicht
- 5: Leitung
- E: Außenseite der Vorrichtung zur Lärmdämmung
- I: Innenseite der Vorrichtung zur Lärmdämmung
- S: Fläche des Ablenkers

## Patentansprüche

1. Vorrichtung zur Lärmdämmung (100, 100a), um das Ende einer Luftleitung (5) auszustatten, die von einem Gasstrom durchquert wird, wobei die Vorrichtung umfasst:
- einen Ablenker (2, 3, 4), der dafür geeignet ist, die Achse (xx) des Stroms am Ende der Leitung (5) zu schneiden,
- wobei der Ablenker gebildet ist aus:
* Resonatorhohlräumen (31, 31a), die mit Hälsen (34, 34a) versehen sind,
* wobei diese Hohlräume (31, 31a) mit einer Schicht aus absorbierendem Schaum (4, 4a) bedeckt sind, und
* wobei die Hälse (34, 34a) der Hohlräume (31, 31a) die Schicht aus absorbierendem Schaum (4, 4a) durchqueren, wobei die Vorrichtung zur Lärmdämmung (100, 100a) aus einem offenen (13, 13a) Körper (1, 1a) besteht, der mit einer Verbindung (11) für die Leitung (5) und mit einer Eintritts-/Austrittsöffnung (12) versehen ist,
**dadurch gekennzeichnet, dass**
der Körper (1, 1a) mit eine Aussparung (13) am Schnittpunkt des Stroms aus der Leitung (5) und in der Öffnung (12 versehen ist, wobei diese Aussparung (13) von einer Abdeckung (2) verschlossen ist, die mit dem Körper (1) kombiniert ist, um den Ablenker zu bilden, indem aufgenommen wird:
- ein Rahmen (3, 3a), der mit Trennwänden (33, 33a) versehen ist und in der Abdeckung (2) fixiert ist, und der mit der Abdeckung (2) Resonatorhohlräume (31, 31a) begrenzt, mit:
* einer Bahn (32, 32a), die rohrförmige Elemente (34, 34a) trägt, welche die Hälse der Resonatorhohlräume (31, 31a) bilden,
* wobei die Bahn (32, 32a) von einer Schicht aus absorbierendem Schaum bedeckt ist und von den rohrförmigen Elementen (34, 34a) durchquert wird.

2. Vorrichtung zur Lärmdämmung (100, 100a) nach Anspruch 1, **dadurch gekennzeichnet, dass**
die Abdeckung (2) von einem Boden (21) gebildet ist, der von einer Seitenwand (22) begrenzt ist, die mit einem Rand (221) versehen ist, um sich mit dem Rand (131) der Aussparung (13) des Körpers (1) zusammenzufügen und den Körper (1) zu verschließen.

3. Vorrichtung zur Lärmdämmung (100, 100a) nach Anspruch 1, **dadurch gekennzeichnet, dass**
der Boden (21) der Abdeckung (22) gekrümmt ist, insbesondere in den drei Richtungen des Raums.

4. Vorrichtung zur Lärmdämmung (100, 100a) nach Anspruch 1, **dadurch gekennzeichnet, dass**
die Bahn (32) einteilig mit den Trennwänden (33) und den rohrförmigen Elementen (34) hergestellt ist.

5. Vorrichtung zur Lärmdämmung (100, 100a) nach Anspruch 1, **dadurch gekennzeichnet, dass**
der Rahmen (3a) in der Form einer Platte (30a) mit den Trennwänden (33a) ist, welche die Resonatorhohlräume (31a) begrenzen, wobei diese Platte mit der Bahn (32a) kombiniert ist, die mit rohrförmigen Elementen (34a) versehen ist, welche die Resonatorhälse bilden,
* wobei die Platte (30a) mit Trennwänden und die Bahn (32a) getrennt hergestellt und dann zusammengefügt werden.

6. Vorrichtung zur Lärmdämmung (100, 100a) nach Anspruch 4, **dadurch gekennzeichnet, dass**
der Rahmen (3a) als flache Einheit hergestellt ist, die durch ihre Fixierung in der Abdeckung (2) mit gebogener Form in Anlage an den Boden (21) desselben in eine gebogene Form gebracht wird.

7. Vorrichtung zur Lärmdämmung (100, 100a) nach Anspruch 2, **dadurch gekennzeichnet, dass**
die Wand (22) der Abdeckung (2) eine Höhe mindestens gleich der Höhe des Rahmens (3, 3a) aufweist, und insbesondere mindestens gleich der Höhe des Rahmens (3, 3a), der von der Schicht aus absorbierendem Schaum (4, 4a) bedeckt ist.

8. Vorrichtung zur Lärmdämmung (100, 100a) nach einem der Ansprüche 1 bis 7,
**dadurch gekennzeichnet, dass**
die Trennwände, die die Hohlräume begrenzen, mit Öffnungen zum Koppeln der Hohlräume versehen sind oder aus nachgiebigen Trennwänden zum Koppeln der Hohlräume gebildet sind.

9. Vorrichtung zur Lärmdämmung (100, 100a) nach einem der Ansprüche 1 bis 8,
**dadurch gekennzeichnet, dass**
sie in der Form von Elementen aus Kunststoffmaterial hergestellt ist.

## Claims

1. Noise attenuating device (100, 100a) in order to equip the end of an air conduit (5) with a gas stream running through it, wherein the device comprises:
- a deflector (2, 3, 4), which is suitable to intersect the axis (xx) of the stream at the end of the conduit (5),
- wherein the deflector is formed from:
* resonator cavities (31, 31a), which are provided with necks (34, 34a),
* wherein these cavities (31, 31a) are covered with a layer of absorbent foam (4, 4a), and
* wherein the necks (34, 34a) of the cavities (31, 31a) traverse the layer of absorbent foam (4, 4a),
wherein the noise attenuating device (100, 100a) comprises an open (13, 13a) body (1, 1a), which is provided with a connector (11) for the conduit (5) and with an inlet/outlet opening (12),
**characterized in that**
the body (1, 1a) is provided with a cut-out (13) at the point of intersection of the stream out of the conduit (5) and into the opening (12),
wherein this cut-out (13) is closed by a cover (2) which is combined with the body (1) in order to form the deflector, by including:
- a frame (3, 3a, which is provided with partitions (33, 33a) and is fixed in the cover (2) and which, together with the cover (2), delimits resonator cavities (31, 31a), with:
* a sheet (32, 32a) which carries tubular elements (34, 34a) which form the necks of the resonator cavities (31, 31a),
* wherein the sheet (32, 32a) is covered by a layer of absorbent foam and is traversed by the tubular elements (34, 34a).

2. Noise attenuating device (100, 100a) according to Claim 1,
**characterized in that**
the cover (2) is formed by a base (21) which is delimited by a side wall (22) which is provided with a rim (221) in order to mate with the rim (131) of the cut-out (13) of the body (1) and to close the body (1).

3. Noise attenuating device (100, 100a) according to Claim 1,
**characterized in that**
the base (21) of the cover (22) is curved, in particular in the three spatial directions.

4. Noise attenuating device (100, 100a) according to Claim 1,
**characterized in that**
the sheet (32) is produced in one piece with the partitions (33) and the tubular elements (34).

5. Noise attenuating device (100, 100a) according to Claim 1,
**characterized in that**
the frame (3a) is in the form of a plate (30a) having the partitions (33a) which delimit the resonator cavities (31a), wherein this plate is combined with the sheet (32a) that is provided with tubular elements (34a) which form the resonator necks,
* wherein the plate (30a) with partitions and the sheet (32a) are produced separately and then joined together.

6. Noise attenuating device (100, 100a) according to Claim 4,
**characterized in that**
the frame (3a) is produced as a flat unit which is brought into a curved shape as a result of its fixing in the cover (2) with a curved shape in contact with the base (21) of the same.

7. Noise attenuating device (100, 100a) according to Claim 2,
**characterized in that**
the wall (22) of the cover (2) has a height that is at least equal to the height of the frame (3, 3a) and, in particular, is at least equal to the height of the frame (3, 3a) which is covered by the layer of absorbent foam (4, 4a).

8. Noise attenuating device (100, 100a) according to one of Claims 1 to 7,
**characterized in that**
the partitions which delimit the cavities are provided with openings for coupling the cavities or are formed from flexible partitions for coupling the cavities.

9. Noise attenuating device (100, 100a) according to one of Claims 1 to 8,
**characterized in that**
it is produced in the form of elements made of plastic material.

## Revendications

1. Dispositif réducteur de bruit (100, 100a) pour équiper l'extrémité d'une conduite (5) de ventilation traversée par un flux gazeux, le dispositif comprenant :
- un déflecteur (2, 3, 4) approprié pour couper l'axe (xx) du flux à l'extrémité de la conduite (5),
- le déflecteur étant formé de :
* cavités de résonateur (31, 31a) munies de cols (34, 34a),
* ces cavités (31, 31a) étant couvertes par une couche de mousse absorbante (4, 4a), et
* les cols (34, 34a) des cavités (31, 31a) traversant la couche de mousse absorbante (4, 4a),
le dispositif réducteur de bruit (100, 100a) étant constitué d'un corps (1, la) ouvert (13, 13a), muni d'un raccord (11) pour la conduite (5) et d'un orifice d'entrée/sortie (12),
**caractérisé en ce que** le corps (1, la) est muni d'une ouverture (13) à l'intersection du flux hors de la conduite (5) et dans l'orifice (12), cette ouverture (13) étant fermée par un couvercle (2) combiné au corps (1) pour former le déflecteur en recevant :
- une ossature (3, 3a) munie de cloisons (33, 33a) et fixée dans le couvercle (2), et délimitant avec le couvercle (2) des cavités de résonateur (31, 31a), ayant :
* une nappe (32, 32a) portant des éléments tubulaires (34, 34a) formant les cols des cavités de résonateur (31, 31a),
* la nappe (32, 32a) étant couverte par une couche de mousse absorbante et traversée par les éléments tubulaires (34, 34a).

2. Dispositif réducteur de bruit (100, 100a) selon la revendication 1,
**caractérisé en ce que**
le couvercle (2) est formé d'un fond (21) délimité par une paroi latérale (22) munie d'un bord (221) pour s'assembler au bord (131) de l'ouverture (13) du corps (1) et fermer le corps (1).

3. Dispositif réducteur de bruit (100, 100a) selon la revendication 1,
**caractérisé en ce que**
le fond (21) du couvercle (22) est courbe, notamment dans les trois directions de l'espace.

4. Dispositif réducteur de bruit (100, 100a) selon la revendication 1,
**caractérisé en ce que**
la nappe (32) est réalisée solidairement avec les cloisons (33) et les éléments tubulaires (34).

5. Dispositif réducteur de bruit (100, 100a) selon la revendication 1,
**caractérisé en ce que**
l'ossature (3a) est sous la forme d'une plaque (30a) avec les cloisons (33a) délimitant les cavités de résonateur (31a), cette plaque étant combinée à la nappe (32a) munie d'éléments tubulaires (34a) formant les cols des résonateurs,
* la plaque (30a) avec des cloisons et la nappe (32a) étant réalisées séparément puis assemblées.

6. Dispositif réducteur de bruit (100, 100a) selon la revendication 4,
**caractérisé en ce que**
l'ossature (3a) est réalisée comme un ensemble plat mis en forme cintrée par sa fixation dans le couvercle (2), de forme cintrée, en appui contre le fond (21) de celui-ci.

7. Dispositif réducteur de bruit (100, 100a) selon la revendication 2,
**caractérisé en ce que**
la paroi (22) du couvercle (2) a une hauteur au moins égale à la hauteur de l'ossature (3, 3a) et notamment au moins égale à la hauteur de l'ossature (3, 3a) couverte par la couche de mousse absorbante (4, 4a).

8. Dispositif réducteur de bruit (100, 100a) selon l'une quelconque des revendications 1 à 7,
**caractérisé en ce que**
les cloisons délimitant les cavités sont munies d'orifices de couplage des cavités ou sont formées de cloisons souples pour le couplage des cavités.

9. Dispositif réducteur de bruit (100, 100a) selon l'une quelconque des revendications 1 à 8,
**caractérisé en ce qu'**
il est réalisé sous la forme d'éléments en matière plastique.
